# EUROPEAN PATENT APPLICATION

(11) **EP 2 919 150 A1**
(43) Date of publication of application: **16.09.2015**
(21) Application number: 15000729.2
(22) Date of filing: 12.03.2015
(51) Int. Cl.: G06K 9/00, G06K 9/20

(54) **Safety system for vehicles**

(30) Priority: 12.03.2014 SE 1400134
(71) Applicant: Mosberger, Rafael, 702 11 Örebro (SE); Andreasson, Henrik, 702 11 Örebro (SE)
(72) Inventor: Mosberger, Rafael, 702 11 Örebro (SE); Andreasson, Henrik, 702 11 Örebro (SE)
(74) Representative: Vikholm, Tommy

(57) **Abstract**

The invention relates to a method of avoiding collisions with persons and physical objects when operating a vehicle, comprising a vehicle equipped with at least one sensor, where persons and physical objects are equipped with a reflective device, and comprising the following steps: (a) illuminating an area, with a light source arranged on the vehicle, where the light source has a defmed wavelength, (b) registering a first image of the area being illuminated, with a sensor arranged on the vehicle, where the sensor is adapted to the wavelength of the light source, (c) registering a second image of an area, with a sensor arranged on the vehicle, (d) detecting, in a calculating device arranged on the vehicle, persons or physical objects equipped with the reflective device through comparison of the first image and the second image, (e) determining, in a calculating device arranged on the vehicle, whether the detected objects are persons or physical objects, (f) communicating information about detected persons or physical objects. The invention further relates to a safety system and a vehicle equipped with a safety system.

## Description

### TECHNICAL FIELD

The invention relates to a method of avoiding collisions with persons and physical objects when operating a vehicle, comprising a vehicle equipped with at least one sensor. The invention further relates to a safety system for detecting persons and physical objects when operating a vehicle, comprising a vehicle equipped with at least one sensor and an image display device. The invention further relates to a vehicle equipped with a safety system.

### BACKGROUND OF THE INVENTION, PROBLEM AND PRIOR ART

When carrying out operations in relation to building, mining, timber yards, logistics, transport and freight forwarding and any other operations comprising vehicle transports, there is a risk of the vehicle injuring persons and/or damaging physical objects in the immediate vicinity of the vehicle. Especially when a vehicle is reversing or moving in such a way that the driver of the vehicle does not have a full overview of how the vehicle is moving, there is a risk that persons positioned in the vicinity of the vehicle are run over by the vehicle. It is a frequent occurrence that a vehicle often cooperates with one or more persons positioned in the vicinity of the vehicle depending on the nature of the operations. These persons are often unprotected from the vehicle and adapt their own position based on the movements of the vehicle.

In order to facilitate the operation of a vehicle, the vehicle may be equipped with sensors such as a camera connected to an image display device or display which the driver of the vehicle can view. The camera is preferably oriented in the reversing direction of the vehicle and the shown view from the camera is presented to the driver in the display. The driver can use the image information in order to drive the vehicle. In the event that a physical object or a person is identified, the vehicle can be stopped. The problem with this type of solution is that it is difficult for cameras to cover all directions in which the vehicle is driven, and a high level of attention is further required from the driver in order to interpret the information which is presented on the display, especially in connection with intense activity in the vicinity, the image being distorted by weather such as rain, and in cases when the lighting conditions are such that it is difficult to identify objects or persons on the image, for example when it is dark.

In addition, there is a need for autonomous vehicles, or semi-autonomous vehicles, to avoid collisions with persons or physical objects that for some reason are situated in the path of the autonomous vehicle. For these autonomous vehicles, it is required that physical objects or persons can be identified and that the autonomous vehicle can be stopped.

The article "Estimating the 3D Position of Humans wearing a Reflective Vest using a Single Camera System", published at the "International Conference on Field and Service Robotics" in July 2012, discloses detection of persons equipped with reflective vests. The method disclosed in the article does not include identification of whether the detected objects are persons or physical objects.

Patent document US 4,833,469 discloses a system for detecting objects and indicating detection of objects to the driver of a vehicle. The system includes a device for transmitting electromagnetic radiation in the direction of travel of the vehicle and a device for receiving, from an object, reflected electromagnetic radiation. The system further calculates the distance and differential speed to the object based on the transmitted and received electromagnetic radiation. A system for changing the propagation of the electromagnetic wave to cover a greater area/volume is further described. The system disclosed in the patent document does not include identification of the detected objects.

Further problems addressed by the invention will become clear from the following detailed description of the various embodiments.

### OBJECT AND FEATURES OF THE INVENTION

The present invention improves the possibility of detecting persons and physical objects where a vehicle is driven. By equipping persons or objects with a reflector or other device in order to fully or partly reflect electromagnetic radiation, the persons or the physical objects may be detected and identified.

The present invention relates to a method of avoiding collisions with persons and physical objects when operating a vehicle, comprising a vehicle equipped with at least one sensor, where persons and physical objects are equipped with a reflective device, and comprising the following steps:
(a) illuminating an area, with a light source arranged on the vehicle, where the light source has a defined wavelength,
(b) registering a first image of the area being illuminated, with a sensor arranged on the vehicle, where the sensor is adapted to the wavelength of the light source,
(c) registering a second image of an area, with a sensor arranged on the vehicle,
(d) detecting, in a calculating device arranged on the vehicle, persons or physical objects equipped with the reflective device through comparison of the first image and the second image,
(e) determining, in a calculating device arranged on the vehicle, whether the detected objects are persons or physical objects,
(f) communicating information about detected persons or physical objects.

According to further aspects of the improved method for avoiding collisions with persons and physical objects when operating a vehicle, comprising a vehicle equipped with at least one sensor, provision is made as follows:
determining whether the detected objects are persons or physical objects involves the detected objects giving different signatures from the reflective device so that the reflective device for persons provides a first reflective signature and so that the reflective device for physical objects provides a second reflective signature;
determining whether the detected objects are persons or physical objects involves an algorithm which is arranged in the calculating device and which, based upon the position, size, movement or other parameter of the detected objects, determines whether the detected objects are in the form of persons or physical objects;
detected persons may be identified to be in a lying, squatting or standing position;
the information about detected persons or physical objects is visualized in an image display device arranged on the vehicle;
the detected objects are visualized in the form of contours where persons or physical objects are given different contours so that for persons a first type of contour is provided and so that for physical objects a second type of contour is provided.

The invention also relates to an improved safety system for detecting persons and physical objects when operating a vehicle, comprising a vehicle equipped with at least one sensor and one image display device, where persons and physical objects are equipped with a reflective device and the following steps are included:
(a) a light source arranged on the vehicle, where the light source has a defined wavelength, illuminates an area,
(b) a sensor unit arranged on the vehicle, where the sensor unit is adapted to the wavelength of the light source, registers a first image of the illuminated area,
(c) a sensor unit arranged on the vehicle registers a second image,
(d) a calculating device arranged on the vehicle detects objects equipped with the reflective device by comparing the first image to the second image,
(e) a calculating device arranged on the vehicle determines whether the detected objects are persons or physical objects,
(f) information about the detected persons and the physical objects is presented on an image display device.

According to further aspects of the improved safety system for detecting persons and physical objects when operating a vehicle, comprising a vehicle equipped with at least one sensor and one image display device, provision is made as follows:
the reflective device is made to distinguish between vertical and horizontal orientation of the reflective device, and the reflective device has a first design for persons and a second design for physical objects, and the reflective device is at least a reflector adapted or suitable for infrared radiation.

The invention also relates to a vehicle equipped with a safety system.

According to further aspects of a vehicle equipped with a safety system, provision is made as follows:
the vehicle is equipped with a sensor system in the forward direction and a sensor system in the reversing direction, where the safety system automatically selects the sensor system depending on the vehicle's driving direction.

### ADVANTAGES AND EFFECTS OF THE INVENTION

By virtue of the proposed method for avoiding collisions when operating a vehicle and the proposed safety system for vehicles, an improved system for avoiding collisions and for enhanced safety when working with vehicles is obtained in comparison with conventional solutions. By transmitting light and receiving the signal reflected from a reflective vest, persons and physical objects around the vehicle may be detected irrespective of weather conditions, lighting conditions and environmental factors. The method is applicable in full sunlight as well as complete darkness.

The improvement in comparison with using conventional technology, such as reversing cameras, is that the method for avoiding collisions when operating a vehicle and the safety system actively identify persons and physical objects in the vicinity while a conventional system only presents information. The proposed method and the proposed system are also suitable for fully or semi-autonomous systems.

### BRIEF DESCRIPTION OF FIGURES

The invention is described in more detail below with reference to the attached figures, in which:
Fig. 1 shows a vehicle equipped with a safety system for vehicles according to an embodiment of the invention.
Fig. 2 shows a sensor system for safety systems for vehicles according to an embodiment of the invention.
Fig. 3 a shows an image display device for safety systems for vehicles according to an embodiment of the invention.
Fig. 3b shows an image display device for safety systems for vehicles arranged in a vehicle according to an embodiment of the invention.
Fig. 4 shows a flow chart of a method for avoiding collisions when operating a vehicle according to an embodiment of the invention.
Fig. 5 shows a block diagram of safety systems for vehicles according to an embodiment of the invention.
Fig. 6a shows a sensor view in the visual wavelength range for a safety system for vehicles according to an embodiment of the invention.
Fig. 6b shows a sensor view in the infrared wavelength range for a safety system for vehicles according to an embodiment of the invention.
Fig. 7a shows an image display device, with a perspective view from a camera, for a safety system for vehicles according to an embodiment of the invention.
Fig. 7b shows an image display device, with a perspective view from above, for a safety system for vehicles according to an embodiment of the invention.

### DETAILED DESCRIPTION OF EMBODIMENTS

A safety system for a vehicle is used to reduce the risks of persons or physical objects being unintentionally run over or otherwise affected by a vehicle. A driver of a vehicle combines the visual information from windows, mirrors and other devices in order to increase the view around the vehicle together with image information from e.g. a camera or other equipment registering image information and sensor information from e.g. reversing sensors. The registered image information and sensor information is presented in most cases on a display but can also be communicated through sound information or otherwise. In addition, there are systems for detecting persons or objects based on e.g. ultrasound or radar. The driver of the vehicle combines the information from the supporting systems with his own understanding of the situation in order to determine how to drive the vehicle. For autonomous systems, the vehicle is controlled, fully or partly, by the sensor information.

In situations where many disturbances occur, for example at a place of work, depending on weather factors, extensive traffic, etc., the driver of a vehicle is required to make decisions under pressure. If a system which provides the driver with correct and clear information can be introduced into the vehicle, and thus makes it easier for the driver, the risk of an accident may be reduced. By using a safety system that can identify persons and physical objects in the vicinity of the vehicle, the safety system may display information, alert the driver of the vehicle and/or stop the vehicle. Such a safety system is also applicable to autonomous vehicles, i.e. vehicles without a driver, and semi-autonomous systems, i.e. vehicles with a driver but where the vehicle autonomously operates the vehicle fully or partly.

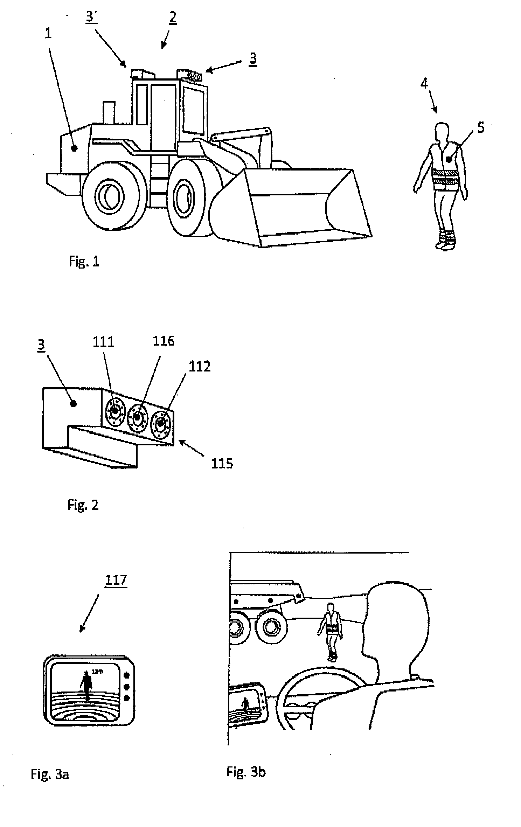

Figure 1 shows a vehicle 1 equipped with a safety system for vehicles 2 where the vehicle is arranged with sensor systems 3, 3'. The number of sensor systems 3, 3' may be adapted based on the driving directions of the vehicle 1 or other parameters relating to the operation of the vehicle. The vehicle sensor systems 3, 3' detect a reflective signature or a reflector from persons 4 and physical objects in the vicinity of the vehicle. The vicinity of the vehicle may be formed by the area in front of the vehicle sensor systems 3, 3' and in a radius around the vehicle of up to 100 metres from the vehicle; however, other longer distances are also possible if there is a need for a longer distance. The vehicle 1, shown in Figure 1, is arranged with a sensor system 3 in the forward direction and a sensor system 3' in the reversing direction. The persons 4 or the physical objects are equipped with a reflective device 5.

Figure 2 shows a sensor system 3 comprising sensors 111, 112, camera 116 and light source 115. According to the embodiment shown in Figure 2, the sensor system has two sensors 111, 112 and a camera 116; however, the sensor system may also be designed with more or fewer sensors and cameras. The sensor system in Figure 2 is further designed with light source 115 in the form of one or more light emitting diodes arranged around the sensors/camera; however, the light source 115 may also be designed as a free-standing unit or otherwise arranged to illuminate the area to which the sensors/camera are directed.

Figure 3a shows an image display device 117 arranged in order to show the driver of the vehicle 1 a view in the driving direction of the vehicle or another direction chosen by the vehicle or driver. The image display device 117 may also be arranged in order to receive commands from the driver, e.g. via keys, touch screen or other device or system, to adapt the safety system for vehicles based on the driver's requirements.

Figure 3b shows an image display device 117 arranged in a vehicle 1. The safety system for vehicles in Figure 3b is arranged to show, in the image display device 117, a view in the driving direction of the vehicle 1.

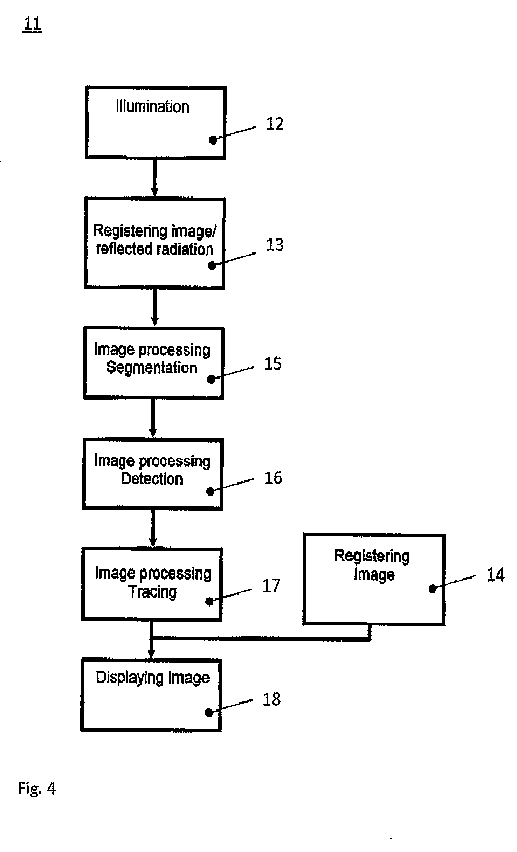

Figure 4 shows a flow chart of a method for avoiding collisions when operating vehicles 11, where the method detects persons or objects equipped with a reflective device. An area is irradiated or illuminated 12 by electromagnetic radiation, preferably infrared radiation, also called IR radiation. The reflected light is registered 13, in the form of a first image, with a sensor, such as a camera or other device, adapted to the transmitted light. A second image or additional images can further be registered 13 with the same sensor or additional sensors, preferably positioned with a distance in relation to each other for a stereographic registration. The second image is preferably taken without prior illumination 12. The first image is thus registered after illumination of the physical objects and persons which are present in the registration range of the sensor and the second image is thus registered without illumination of the physical objects and persons which are present in the registration range of the sensor. A comparison of the first and the second image using image processing technology may thus detect the reflective physical objects and persons in the image. That is, the physical objects and persons arranged with an electromagnetically reflective device, such as a reflective vest or other reflectors, will be detected.

Furthermore, a first visual image may be registered 14, which is preferably done with a sensor sensitive in the optical range visible to humans. All images and visual images may be detected by the same sensor but also by two or more separate sensors.

The registered first image is subjected to image processing by the light objects in the image being identified in the block for image processing segmentation 15. Furthermore, the registered second image may be subjected to image processing by the light objects in the image being identified in the block for image processing segmentation 15. The comparison between the first image and the second image after segmentation 15 provides the physical objects and persons which may be equipped with reflective devices since these physical objects and persons probably provided a signature, created by the illumination 12, in the first image. In a second step of the image processing, image processing detection 16, detection based on the type of the illuminated physical objects or persons identified in the first step of image processing may occur. Detection of the type may for example include that it is a person arranged with a reflective vest or a physical object arranged with a reflective device that is registered. Detection is carried out using algorithms suitable for the purpose, including various forms of learning algorithms. The detected physical objects or persons may then be traced 17 in order to determine whether it is a moving person or a moving physical object, for example another vehicle. The identified objects in the form of physical objects and persons, after the image processing steps 15, 16, 17, may be presented on an image display device 117, such as a display, which is presented to the driver of the vehicle. In order to make the visualization easier, the physical objects and/or persons may be presented in the form of a rectangle or contour, in colour or otherwise highlighted. The coloured rectangle or contour is advantageously presented on a colour image with a view of the registration range of the camera. Thus, the various sensors and cameras advantageously have a fully or partly overlapping registration range. More sets of cameras and sensors with different registration ranges may also be present. The method for avoiding collisions when operating a vehicle, where the method detects persons or physical objects equipped with an electromagnetically reflective device 11, may, in addition to presenting the information visually, provide information about distance to and position of physical objects and/or persons which may be used by the vehicle e.g. for automatic braking, provide visual or audio information or provide information in another way which is suitable for the individual installation and/or vehicle.

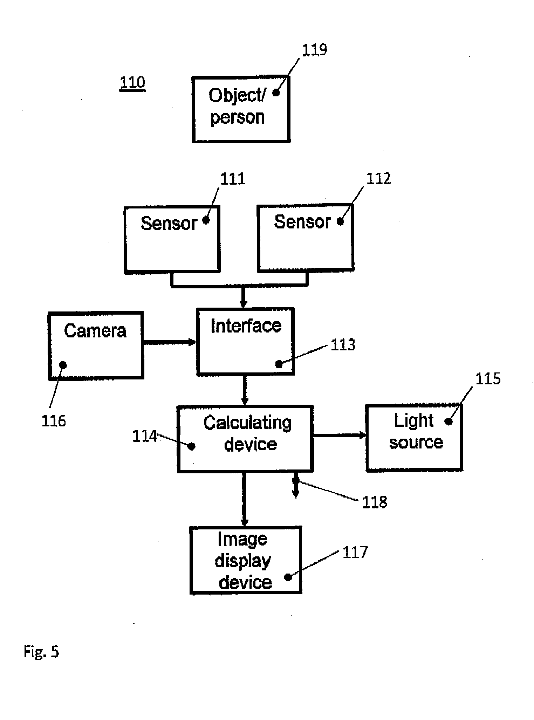

Figure 5 shows a block diagram of a safety system for vehicles 110. At least one sensor 111, 112 is arranged on a vehicle for registering at least one of the vehicle directions. In the event that the vehicle is autonomous, the sensors are advantageously arranged in all directions of travel for the vehicle, and, in the event that the vehicle is operated by a driver, the arrangement is in most cases arranged in the reversing direction of the vehicle or other directions where the view is limited and the driver has difficulty seeing. The sensor or sensors 111, 112 are adapted to the wavelength of the light source 115. By using at least two, advantageously spatially separated, sensors 111, 112, the distance to the persons or objects registered in the image may be calculated. The sensors are connected, directly or via an interface 113, to a calculating device 114. Image processing suitable for the purpose is carried out in the calculating device. The calculating device 114 also checks sensors 111, 112, camera 116 and light source 115. The light source 115 illuminates physical objects and persons 119 in the area where the sensors 111, 112 register image information. The light source 115 illuminates advantageously only the area when a sensor 111, 112 carries out a registration of the area, i.e. during the sensor shutter time. Furthermore, the safety system 110 may be arranged with a camera 115 for registering an image of the area. It is also possible to use a camera arranged on the vehicle for other purposes, for example a reversing camera. The physical objects or persons identified in the images by the calculating device may be displayed layered or otherwise arranged together with an image from the camera 116 on a display device 117. The calculating device may also be arranged to generate a signal 118 that can be used to e.g. stop the vehicle which is fitted with the safety system 110.

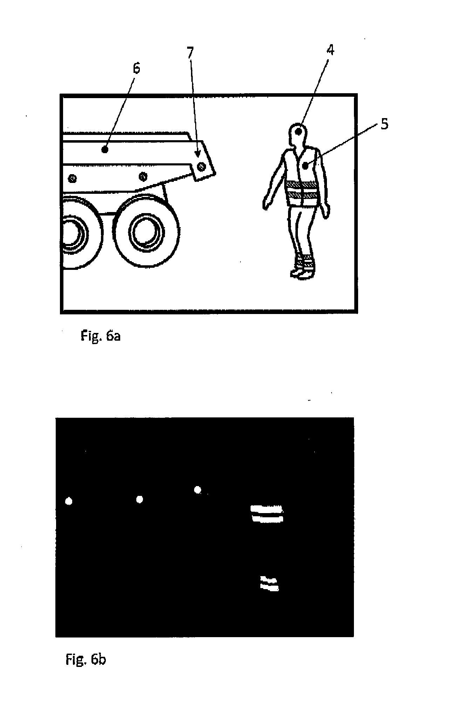

Figures 6a and 6b show a view from the sensors and the camera 111, 112, 115. Figure 6a shows a view from a sensor that registers image information in the visual wavelength range. The view shown in Figure 6a is of a physical object 6, in the form of a vehicle, where the physical object is equipped with a reflective device 7, in the form of reflectors arranged on the vehicle, and one person 4 equipped with a reflective device 5. The view shown in Figure 6b is from a sensor that registers image information in the infrared wavelength range. It is evident in Figure 6b how the reflected information, which is electromagnetic radiation from the light source that was reflected in the reflective device 5, 7, provides information in relation to physical objects 6 and persons 4.

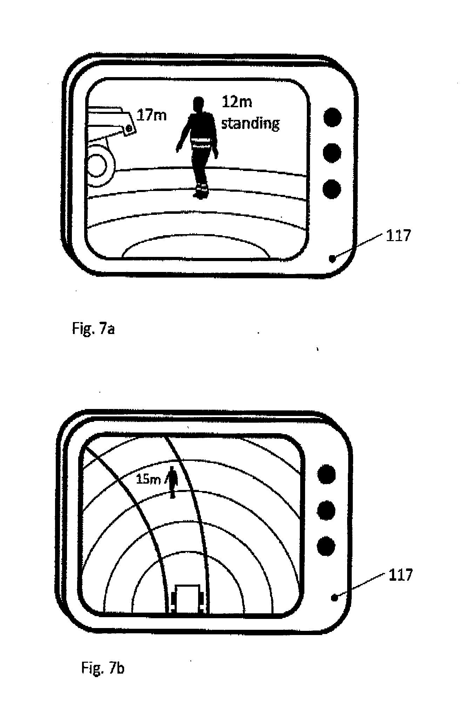

Figures 7a and 7b show two different views on an image display device 117. Figure 7a shows a view in the vehicle's driving direction from a camera arranged in the direction that is shown in the view. Figure 7b shows a view from above, where the view displayed in Figure 7b is calculated by the safety system for vehicles 110. The driver of the vehicle can choose the required view through an interface arranged on the image display device 117. In an alternative embodiment, the safety system for vehicles 110 can change the view on the image display device 117 to alert the driver. The information in the image display device 117 may be image information with distance to persons or physical objects, which is indicated in Figures 7a, 7b, with indication of the distance to the physical objects and/or persons. For the view from above, distance lines may also be presented on the image display device 117 to indicate the distance to physical objects or persons. The distance lines are presented with a definable distance, for example 5 m. The estimated future route of the vehicle can also be presented on the image display device indicated in Figure 7b. Figure 7b indicates that the potential future route or course of the vehicle 1 becomes wider/greater with increased distance as the uncertainty of the future route of the vehicle increases with increased distance when the possibilities of operation increases with the distance. If there are any persons or physical objects in the projected route, a visual or audio or otherwise indicated alarm can alert the driver of the vehicle 1 that there is a risk of collision. It is also conceivable that the safety system for vehicles 110 calculates an estimated time of collision and automatically brakes or otherwise limits the vehicle speed.

### DESCRIPTION OF FUNCTION

Figure 1 shows a vehicle 1 equipped with a safety system for vehicles 2 where the vehicle is arranged with sensor systems 3, 3' in the forward and reversing directions of the vehicle. The vehicle sensor systems 3, 3' can transmit electromagnetic radiation and detect a reflective signature or a reflector from persons 4 and physical objects equipped with a reflective device 5 in the vicinity of the vehicle 1 and register image information using the sensors and/or cameras of the sensor systems 3, 3'.

The sensor system 3, shown in Figure 2, comprises at least one sensor 111, 112, and at least one camera 116 and at least one light source 115. It is also conceivable that the same sensor can function as a sensor as well as a camera by adapting the sensor to the wavelength range. The sensor system 3, 3' is preferably arranged as one unit for installation on the vehicle, but the sensor system can also be arranged on the vehicle by individual installation or by using sensors, cameras or light sources already arranged on the vehicle. Two sensor systems 3, 3' are preferably arranged on the vehicle 1, one sensor system 3 in the forward direction and one sensor system 3' in the reversing direction, and where the safety system for vehicles 110 automatically changes the sensor system 3, 3' and the view on the image display device 117 based on the vehicle direction so that when the vehicle is reversing the sensor system 3, 3' arranged in the reversing direction 3' is selected, and when the vehicle is driven forwards the sensor system 3 arranged in the forward direction is selected. Furthermore, both sensor systems 3, 3' can be used at the same time to create a view of the situation around the vehicle from above.

An image display device 117, shown in Figure 3a, is arranged to show the driver of the vehicle 1 a view in the vehicle direction or another direction selected by the vehicle or the driver. The driver of the vehicle 1 can also control the safety system for the vehicle using the image display device 117. Figure 3b shows how the image display device 117 can be arranged in the vehicle so that the driver gets a good overview of the information presented on the image display device 117 as well as being able to operate the interface with which the driver can control the safety system for the vehicle 110.

Figure 4 shows a flow chart of a method for avoiding collisions when operating vehicles, where the method detects persons or objects equipped with a reflective device 11 reflecting optical radiation. Images 13 are preferably registered with a frequency of 30 images per second, although more or fewer images per second are also possible.

Each registration of an image 13 takes place with a shutter time in the range of 1 ms, thus the illumination 12 should also take place in the range of 1 ms. For each image that is registered 13 with illumination 12 by the light source 115, the first image, a second image is registered 13 without using the light source 115. The second image can be registered using the same sensor 111, 112 but can also be registered by a different sensor 111, 112. In a preferred embodiment the first image is registered using a first sensor that is sensitive to the infrared range, and the second image using a second sensor that is sensitive in the whole visual range. Additional sets of images can also be registered 13 to obtain e.g. better image quality or to achieve a better capability of calculating distance to objects and persons. When a set of images has been registered, the sequence of registering a first image, then a second image etc. is repeated, where at least one of the images is registered at the same time as the registration area is illuminated. By comparing images registered when the light source was active with images registered without a light source, physical objects and persons reflecting light from the light source 115 can be distinguished. Depending on the surrounding light conditions, for example strong sunlight or complete darkness, the differences between the first image and the second image will be of a different order. Using a suitable algorithm for segmentation 15, objects can be identified, where the objects represent the reflective physical objects and persons. The objects identified through comparison of the first image and the second image in the block for segmentation 15 can, after detection 16, be classified as being physical objects or persons. Detection 16 takes place with a learning algorithm suitable for the purpose which identifies physical objects and persons based on the detected reflective objects from the segmentation 15. Detection 16 includes determining whether the identified objects are in the form of physical objects or persons. For example, determination can take place based on the identified objects having different reflective signatures in relation to a pattern, intensity or frequency contents. For example, the reflective signature may indicate whether the physical object or person is in a vertical or horizontal orientation, e.g. in order to determine if a person is lying down or standing. In a preferable case, persons can be identified as being in a standing, lying down or squatting position, where the squatting position includes all positions between lying down and standing. Thus, a judgement regarding a person's observational ability and mobility can be made based on the person's posture, where a person lying down is judged to have a low observational ability and mobility which means that great caution/care is required when driving the vehicle towards a person lying down, and a squatting person is judged to have limited observational ability and mobility for which reason a vehicle being driven towards a squatting person must observe caution/care, and, in cases when a person is standing, the vehicle can be driven with limited/normal caution/care. A standing person is judged to have a normal observational ability and mobility. In addition, a judgement can be made whether the person is turned towards or away from the vehicle. A standing person, who is turned towards the vehicle, so that the standing person can see the vehicle, is judged to have a higher observational ability and mobility compared to a standing person turned away from the vehicle, so that the standing person does not see the vehicle. In the same way, a squatting person turned towards the vehicle, so that the squatting person can see the vehicle, is judged to have a higher observational ability and mobility compared to a squatting person who is turned away from the vehicle, so that the squatting person does not see the vehicle. Thus, five different scenarios can be identified in relation to the position of persons: lying down, squatting towards the vehicle, squatting away from the vehicle, standing looking towards the vehicle and standing looking away from the vehicle.

The physical objects and persons may further be equipped with a reflective device which provides a different reflective signature in order to distinguish physical objects from persons through the reflective signature. Other parameters that affect the reflective physical objects and persons may also be present. The physical objects and persons detected by detection 16 can be traced 17 through comparisons with subsequent series of images. Through tracing 17, changes of the detected physical objects and persons can be traced that change relative to the vehicle when the vehicle is moving; and whether the physical objects or persons are moving. Through tracing 17, improved identification and determination of the physical objects and persons can be achieved; for example, physical objects and persons moving towards the vehicle or otherwise increasing the risks of collision can be detected. The physical objects and persons can be viewed 18 through visualization of the physical objects and persons, for example through rectangles in an image of the area or through contours of the physical objects or contours of the persons. Advantageously the contours of persons are formed with a specific form of contour, e.g. through selecting the colour of the contour or the line thickness or type of line, and the physical objects have another specific form of the contour, e.g. through colour or line thickness or type of line. The contours can also indicate whether the persons are turned towards the vehicle and then receive one form of a contour or are turned away from the vehicle, with their back to the vehicle, and are then visualized in a different form of contour. In the event that a person is judged to have a reduced view, e.g. if the person is turned away from the vehicle, or when the vehicle is close to a person, the form of the contour can be made clearer by making the contour flash or otherwise make it clear that there is a risk. Different types of physical objects can be further distinguished with the help of the form of the contour, e.g. through colour or thickness of the line or type of line.

Advantageously, the visualized objects can be presented superimposed on an image registered 14 by a camera arranged on the vehicle. The camera that is used for this registration of an image can be a camera already arranged on the vehicle, e.g. an existing reversing camera. The flow diagram shown in Figure 4 of a method for avoiding collisions when operating vehicles, where the method detects persons or physical objects equipped with an electromagnetic reflective device 11, shows that the information is presented, displayed 18, to a driver of the vehicle. The information about the physical objects and persons can also be used to stop the vehicle in the event the vehicle gets too close to or otherwise may put the physical objects or persons at risk, or in the event the vehicle 1 may be put at risk. Other alternatives are also possible, for example alarm signals in the form of sound and/or light in the event the vehicle gets too close to or otherwise may put the physical objects and persons at risk. An alternative solution is that the vehicle speed is automatically controlled downwards when physical objects and persons are in the vicinity of the vehicle or when the vehicle is approaching, and another alternative is that audio signals and/or light signals increase in intensity when physical objects and persons are in the vicinity of the vehicle or when the vehicle is approaching.

A safety system for vehicles 110, shown in Figure 5, comprises a number of sensors 111, 112 for registering mainly infrared radiation in the wavelength range 700 nm to 1 mm. The sensors are for example CMOS sensors with high sensitivity in the infrared range, an advantageous embodiment is a sensitivity in the NIR range, with a wavelength of 750 nm to 1,400 nm, especially suitable for the frequencies 850 nm and 940 nm where there is a small amount of natural radiation from the sun. The sensors are advantageously arranged with an optical lens and a filter. The number of sensors is at least one; if more sensors are used they are advantageously positioned at a distance in order to make distance evaluations in the images possible. The distance between the sensors may be in the range of 20 cm, but there may also be greater or smaller distances. Determining distances in a stereogram, several images being registered with a relative distance, is to be regarded as generally known and is not discussed further in this application. A sensor can also be arranged with optics in order to register images spatially. In the event the safety system for vehicles 110 presents information to a driver of a vehicle, it is advantageous to present information registered by the sensors 111, 112 superimposed on a camera image. The camera image can be registered by a camera 116 arranged on the vehicle as a part of the vehicle's other systems, for example a reversing camera, or as part of the safety system for vehicles 110. All sensors 111, 112 and the camera 116 can be connected to a calculating device 114. An interface 113 can be arranged between the sensors 111, 112, the camera 116 and the calculating device 114 if required. For example, the interface 113 can adapt the format of images, signal levels and other characteristics suitable in order for the calculating device 114 to be able to handle the information from the sensors 111, 112 and the camera 116. The calculating device 114 controls the sensors 111, 112, the camera 116 and the light source 115 and carries out calculations of the registered images. The result from the calculating device 114 can be presented on an image display device 117 or in the form of a signal 118. In the event that the physical objects and persons calculated and detected in the calculating device 114 are presented on an image display device 117, the physical objects and persons may be presented in the form of a frame or contour in a camera image from the camera 116. In the event that information about the physical objects and persons is communicated in the form of a signal 118, the information may fully or partly control the vehicle. The information about the physical objects and persons, through a signal 118, may be used to stop the vehicle in the event that the vehicle gets too close or otherwise may put the physical objects and persons at risk. Other alternatives are also conceivable, for example alarm signals in the form of sound and/or light in the event that the vehicle gets too close or otherwise may put the physical objects and persons at risk. An alternative solution is that the vehicle speed is automatically controlled downwards when physical objects and persons are in the vicinity of the vehicle or when the vehicle is approaching, and another alternative is that sound signals and/or light signals increase in intensity when physical objects and persons are in the vicinity of the vehicle or when the vehicle is approaching. The information in a signal 118 can control the vehicle to various extents, especially in the event that the safety system for vehicles 110 is arranged on an autonomous vehicle. The safety system for vehicles 110 in an autonomous vehicle may be used to detect and avoid other vehicles, autonomous or operated by a driver and equipped with a reflective device, but also to detect and avoid persons or physical objects equipped with a reflective device.

Figure 6a shows a view from a sensor which registers image information in the visual wavelength range, e.g. a camera; in this view information from the sensors 111, 112 can be superimposed. Especially when the light conditions are such that a visual image is difficult to interpret, e.g. in darkness, the superimposed information from the sensors 111, 112 can clarify objects and persons in the image. Object 6 in Figure 6a is in the form of a vehicle but can also be formed by other physical objects such as various forms of fixed or mobile installations, objects from nature such as trees or rocks, or other objects which should be avoided when a vehicle is driven. The object 6 is equipped with a reflective device 7 in the form of reflectors arranged on the vehicle. The reflectors may be arranged in such a way that the object can be identified, for example by the reflector providing a special signature or by the positioning of the reflectors. A preferred embodiment is if the reflectors can be positioned in the form of a contour of the object. The view in Figure 6a further shows a person 4 equipped with a reflective device 5. The safety system for vehicles 110 includes sensors 111, 112 sensitive in the infrared wavelength range; Figure 6b shows a view from these sensors 111, 112. It is evident in Figure 6b how the reflected information, which is electromagnetic radiation from the light source reflected in the reflective device 5, 7, provides information in relation to physical objects 6 and persons 4. Based on the information from the sensors 111, 112, shown in Figure 6b, the safety system for vehicles can calculate whether the reflectors are formed by physical objects or persons which type of object is present and the distance to the object or persons and the current position of the persons.

The information from the safety system for vehicles 110 is presented on an image display device 117. Figures 7a and 7b show two different views presented on an image display device 117. Figure 7a shows a view in the vehicle's driving direction from a camera arranged in the direction shown in the view. Figure 7b shows a view from above, the view shown in Figure 7b being calculated by the safety system for vehicles 110. The driver of the vehicle can choose the required view through an interface arranged on the image display device 117. In an alternative embodiment, the safety system for vehicles 110 can change the view on the image display device 117 in order to alert the driver.

### ALTERNATIVE EMBODIMENTS

The invention is not limited to the particular embodiments shown but can be varied in different ways within the scope of the patent claims. One application is navigating a vehicle in an environment where objects have been provided with reflective devices, e.g. for autonomous navigation of vehicles in an environment provided with reflective devices. For example, a route for an autonomous vehicle may be arranged with reflective devices to guide the vehicle. The invention can further be used for navigating vehicles in darkness when only information from the reflective devices is used for navigating and controlling the vehicle.

It will be appreciated, for example, that the number of sensors, frequency ranges, vehicles, types of vehicle or systems of the method for avoiding collision when operating vehicles or the elements and parts of the safety system can be adapted to a platform or plant and other construction characteristics which currently exist. The safety system and the method for avoiding collisions when operating vehicles may be used for all systems and vehicles and for other arrangements as needed.

The orientation of a person from the reflective patterns is difficult to estimate since a person seen from the front looks very similar as a person seen from the back in terms of the reflectors. The use of reflective clothing with different reflective patterns on the left arm and leg with respect to the right arm and right leg makes recognition of orientation possible. An example is 2 parallel reflective stripes on the left arm/leg and 3 parallel stripes on the right arm/leg. Information about the detected persons may be identified to be turned towards the vehicle or to be turned away from the vehicle. When the person is turned towards the vehicle the person is facing the vehicle, when the person is turned away from the vehicle the person is positioned with the persons back towards the vehicle.

## Claims

1. Method of avoiding collisions with persons and physical objects when operating a vehicle, comprising a vehicle equipped with at least one sensor, **characterized in that** persons and physical objects are equipped with a reflective device, and comprising the following steps:
(a) illuminating an area, with a light source arranged on the vehicle, where the light source has a defined wavelength,
(b) registering a first image of the area being illuminated, with a sensor arranged on the vehicle, where the sensor is adapted to the wavelength of the light source,
(c) registering a second image of an area, with a sensor arranged on the vehicle,
(d) detecting, in a calculating device arranged on the vehicle, persons or physical objects equipped with the reflective device through comparison of the first image and the second image,
(e) determining, in a calculating device arranged on the vehicle, whether the detected objects are persons or physical objects,
(f) communicating information about detected persons or physical objects.

2. Method according to claim 1, **characterized in that** determining whether the detected objects are persons or physical objects involves the detected objects giving different signatures from the reflective device so that the reflective device for persons provides a first reflective signature and so that the reflective device for physical objects provides a second reflective signature.

3. Method according to either of claims 1 and 2, **characterized in that** determining whether the detected objects are persons or physical objects involves an algorithm which is arranged in the calculating device and which, based upon the position, size, movement or other parameter of the detected objects determines whether the detected objects are in the form of persons or physical objects.

4. Method according to any one of claims 1 to 3, **characterized in that** detected persons may be identified to be in a lying, squatting or standing position.

5. Method according to any one of claims 1 to 4, **characterized in that** the information about detected persons or physical objects is visualized in an image display device arranged on the vehicle.

6. Method according to claim 5, **characterized in that** the detected objects are visualized in the form of contours, where persons or physical objects are given different contours so that for persons a first type of contour is provided and so that for physical objects a second type of contour is provided.

7. Safety system for detecting persons and physical objects when operating a vehicle, comprising a vehicle equipped with at least one sensor unit and one image display device, **characterized in that** persons and physical objects are equipped with a reflective device and that the following steps are included:
(a) a light source arranged on the vehicle, where the light source has a defined wavelength, illuminates an area,
(b) the sensor unit arranged on the vehicle, where the sensor unit is adapted to the wavelength of the light source, registers a first image of the illuminated area,
(c) the sensor unit arranged on the vehicle registers a second image,
(d) a calculating device arranged on the vehicle detects objects equipped with the reflective device by comparing the first image to the second image,
(e) a calculating device arranged on the vehicle determines whether the detected objects are persons or physical objects,
(f) information about the detected persons and the physical objects is presented on an image display device.

8. Safety system according to claim 7, **characterized in that** the reflective device is made to distinguish between vertical and horizontal orientation of the reflective device, and the reflective device has a first design for persons and a second design for physical objects, and the reflective device is at least a reflector adapted or suitable for infrared radiation.

9. Vehicle equipped with a safety system according to either of claims 7 and 8.

10. Vehicle equipped with a safety system according to claim 9, **characterized in that** the vehicle is equipped with a sensor system (3) in the forward direction and a sensor system (3') in the reversing direction, where the safety system automatically selects the sensor system (3, 3') depending on the vehicle's driving direction.
